# EUROPEAN PATENT APPLICATION

(11) **EP 3 591 126 A1**
(43) Date of publication of application: **08.01.2020**
(21) Application number: 18382496.0
(22) Date of filing: 05.07.2018
(51) Int. Cl.: E02F 9/28, E02F 9/26

(54) **FASTENING SYSTEM OF AN ADAPTER FOR EARTHMOVING MACHINES**

(71) Applicant: Metalogenia Research & Technologies S.L., 08005 Barcelona (ES)
(72) Inventor: MARQUEZ LLINAS, Jordi, 08223 Terrassa (Barcelona) (ES); VALLVÉ, Nil, 08349 Cabrera de Mar (Barcelona) (ES); JARAS VILLAR, Raúl, 01012 Vitoria-Gasteiz (Álava) (ES); FERNÁNDEZ HERNÁNDEZ, Jaime, 01012 Vitoria-Gasteiz (Álava) (ES); TRIGINER BOIXEDA, Jorge, 08017 BARCELONA (ES); ALONSO FRIGOLA, Ester, 17460 Celra (Girona) (ES)
(74) Representative: Herrero & Asociados, S.L.

(57) **Abstract**

The fastening system of an adapter for earthmoving machines comprising a fastening element (1) which fastens an adapter (2) to an edge (10) of a bucket of the earthmoving machine; and a wedge (3) placed in contact between the fastening element (1) and the edge (10), in which the system comprises a plurality of sensors (4) arranged in the wedge (3) or in the fastening element (1) which detect at least one detection element (5) arranged on the other between the fastening element (1) or the wedge (3).

The invention makes it possible to continuously detect and control the position of the wedge with respect to the fastening element, without having to visually check the position of the wedge.

## Description

The present invention relates to a fastening system of an adapter for earthmoving machines that makes it possible to control its correct position in a continuous and automated manner.

### Background of the invention

The use of earthmoving machines such as, for example, excavators or loaders and power shovels is usual in public works, mining, etc. In general, these machines comprise a bucket provided with a plurality of edges in which the material is collected. This bucket is subjected to high stress and significant wear mainly in the front, which is usually called a cutting edge. For this reason and in general, cutting edges usually incorporate a plurality of protection or wearing elements:
These protection elements include:
   - teeth: have the function of penetrating the soil and contributing to the loading of material and protecting the cutting edge of the bucket;
   - adapter: has the function of protecting the cutting edge and supporting the teeth;
   - frontal protectors: have the function of protecting the lip in the areas between the teeth and also the function of penetrating the soil to a lesser extent than the teeth;
   - side protectors: protect the sides of the bucket.

All these elements, usually referred to together as wearing or protection elements, are subjected to strong mechanical stresses, plastic deformations and significant wear. For this reason, they are usually replaced with a certain frequency and as needed based on the wear they experience.

Wear or protection elements can be mechanically fastened or welded depending on the degree of abrasiveness of the soil and the dimensions of the machine. If they are mechanically fastened, they can be changed more easily and quickly, whereas they are cheaper if welded, but face greater difficulties during changes and can damage the cutting edge while they are welded.

The mechanical fastening of the adapters is usually done by means of a fastening element with a C-section that is fastened to each edge of the bucket, and a wedge, which snaps on between said fastening element and the adapter.

During use said wedge tends to move downward. Such movement must be controlled to ensure the proper operation of the wearing elements by ensuring that the wedge is in the correct position.

During work, the front of the cutting edge wears and is plastically deformed due to friction with the adapter. Another point where wear/deformation appears is the area between the wedge and the front of the cutting edge hole.

With such wear and plastic deformation, the adapter or protector moves back, thereby increasing the space for the wedge and the front of the cutting edge hole. When said space appears, the wedge moves downward until it tightens once again. It is very important for the adapter and protector to work when tight, to prevent them from falling or breaking during the operation.

It is important to prevent the wedge from moving such that it comes loose from under the adapter or protector, since, if it does come loose and hits the soil, it can be hurled upwards, which is dangerous for users and will also cause the adapter to fall (unplanned stoppage, loss of production, etc.). This is why it is important to know the position of the wedge at all times.

Currently. there is no reliable way to check the position of the wedge. A visual inspection of the top of the adapter or protectors offers no guarantees as to the wear suffered by the buckets of the adapters or protectors and by the wedge itself makes it impossible to determine the actual height thereof. Another option would be to check the position of the wedge on the bottom, which is less exposed to wear. However, it is extremely dangerous to go below the bucket and check it visually. This operation is actually prohibited by mining companies to prevent accidents.

When it has been detected that the wedge has moved considerably downwards, it follows that the wear and/or plastic deformation in the front of the cutting edge and in the front of the hole is such that they must be reconstructed according to the original shape to ensure correct support and assembly between the wearing elements and the cutting edge. This reconstruction is necessary to prevent the elements from having play and breaking during the excavation operation. In some applications, before reconstructing the front of the cutting edge, what is done as an intermediate step is to change the wedge for a thicker wedge to recover the tightness in the mechanical system. When this second wedge has moved considerably downwards, then there is no other solution than to reconstruct the front of the cutting edge. Currently, there is no metric that allows the user to know when the most appropriate time is to change the wedge or rebuild the lip.

Currently, checking the position of the wedge is carried out visually by specialized personnel, which implies the investment of significant time since the check must be carried out periodically for each of the adapters or protectors of each earthmoving machine. Another factor to take into consideration is safety, since the operator could decide to go under the bucket to check the position of the wedges. Furthermore, it is necessary for the machine to come to a complete stop to perform this inspection and it must be done in person, requiring personnel from the mine or worksite to travel to the location of the machine in question to conduct the check. In addition, due to the upper and lower wear suffered by the adapters and protectors, it is impossible to take an exact measurement of the movement of the wedge.

Therefore, an object of the present invention is to provide a fastening system for adapters and protectors that makes it possible to check, on a continuous or substantially continuous basis, the position of the wedges in an automated, secure and remote manner without the need to stop the machine or to move personnel to the pit of the mine or worksite.

### Description of the invention

The fastening system of the invention solves the aforementioned drawbacks and exhibits other advantages that will be described below.

The fastening system of an adapter for earthmoving machines according to the present invention comprises:
a fastening element which fastens an adapter to an edge of a bucket of the earthmoving machine; and
a wedge placed in contact between the fastening element and the edge, inside the adapter hole, characterized in that the system comprises a plurality of sensors arranged in the wedge or in the fastening element which detect at least one detection element arranged in the other between the fastening element or the wedge. That is, said sensors are mounted on the wedge and said at least one detection element is mounted on the fastening element, or vice versa.

Thanks to this characteristic, it becomes possible to continuously detect and control the position of the wedge with respect to the fastening element, without the need to visually check the position of the wedge.

According to two alternative embodiments, said sensors are magnetic field sensors or said sensors are metal sensors.

According to said alternative embodiments, said at least one detection element is a magnet or a plurality of magnets or said at least one detection element is a hole or a plurality of holes.

For example, said metal sensors can be spirals printed on a printed circuit board.

As an advantage, said sensors are connected to a control means, which performs the calculations to determine the position of the wedge with respect to the fastening element, and sends the result of said calculations to an external element in a wired or wireless manner which displays the information regarding the position of the wedge.

For example, said information can be displayed in a specific application on a mobile phone, with the possibility of triggering an alarm in the event it is determined that the wedge is not in the correct position This information can also be displayed on a control screen in the operator's cabin of the machine to prevent accidents. For example, if the wedge has moved more than the recommended distance, the operator receives an alert to change the wedge before the wearing element in questions falls or breaks.

It should be noted that in the present description and in the claims by the term "adapter" is intended to identify an adapter, a protector, a side protector or any adapter mechanically fastened to an earthmoving machine.

### Brief description of the drawings

To aid in a better understanding of the invention the following drawings have been attached, which represent some embodiments schematically and only by way of non-limiting examples.
Figure 1 is a perspective view of the fastening of a tooth and an adapter to an edge of a bucket of an earthmoving machine;
Figure 2 is a longitudinal sectional view of the fastening of the tooth and the adapter of figure 1;
Figure 3 is a sectional view showing the fastening system of the present invention according to a first embodiment;
Figure 4 is a sectional view showing the fastening system of the present invention according to a second embodiment; and
Figure 5 is a sectional view showing the fastening system of the present invention according to a third embodiment.

### Description of preferred embodiments

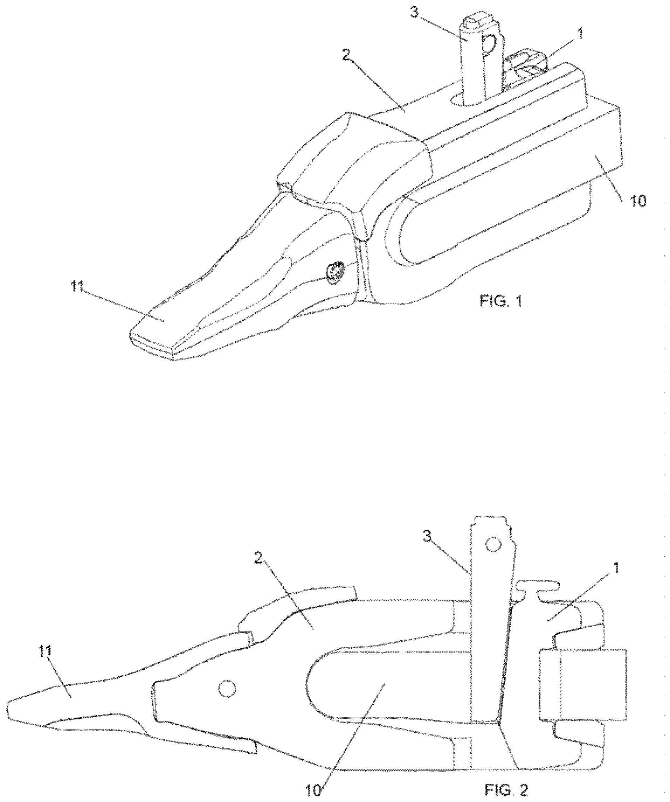

Figures 1 and 2 show an edge 10 of a bucket of an earthmoving machine to which an adapter 2 is fastened, on the front end of which a tooth 11 of an earthmoving machine is fastened.

The fastening of the adapter 2 to the edge 10 of the bucket is provided by means of a fastening element 1 with a C-shaped section, as shown in figure 2, and a wedge 3 placed in contact between the fastening element 1 and the edge 10.

To detect the position of the wedge 3 with respect to the fastening element 1, the fastening system comprises a plurality of sensors 4 that detect at least one detection element 5.

The data on the detection of the position of the wedge 3 are sent to a control means 6, which can be placed in the fastening system itself, for example, in the wedge 3 or in the fastening element 1, and this control means 6 can be connected to an external processor in a wired or wireless manner, for example, to a mobile phone provided with a specific application, indicating to the user the position and possible change of the wedge 3.

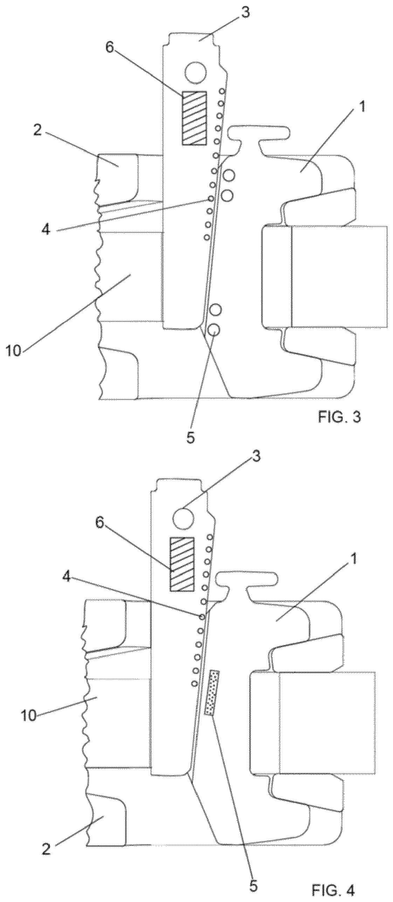

Three different embodiments of the fastening system according to the present invention are shown in figures 3 to 5.

In the first embodiment shown in figure 3, the sensors 4 are placed in the wedge 3 vertically and are magnetic sensors, and the fastening element 1 comprises a plurality of magnets also vertically placed, which constitute the detection elements 5.

It should be noted, however, that the sensors 4 could be placed in the fastening element 1 and the detection elements 5 could be placed in the wedge, since the detection effect would be the same.

In the second embodiment shown in figure 4, the sensors 4 are also placed vertically in the wedge 3 and are metal detector sensors, for example, a plurality of spirals printed on a printed circuit board, which is arranged vertically. For its part, the detection element 5 is a hole made in the fastening element 1. Furthermore, in this embodiment, the control means 6 is placed in the wedge 3.

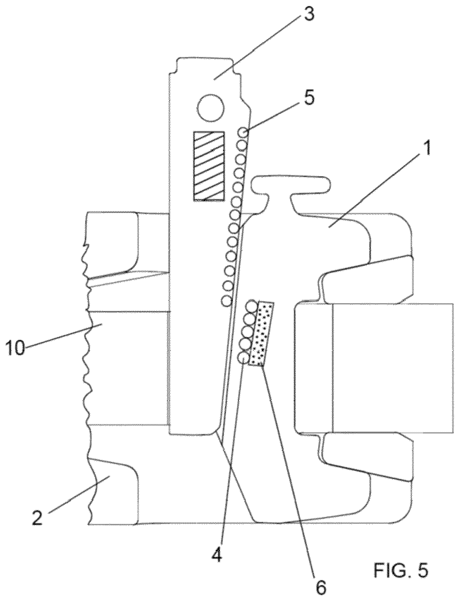

The third embodiment shown in Figure 5 is very similar to the second embodiment. The main difference is that the sensors 4 are arranged in the fastening element 1, while the wedge 3 comprises a plurality of holes that are used as detection elements 5.

In this third embodiment, the sensors 4 are also metal detector sensors and are also a plurality of spirals printed on a printed circuit board. Furthermore, in this embodiment, the control means 6 is placed in the fastening element 1.

The operation of the fastening system according to the present invention is as follows:
The adapter 2 is fastened to the edge 10 of the bucket of the earthmoving machine in a conventional manner by means of the fastening element 1 and the wedge 3 described above.

Unlike conventional fastening systems in which it is not possible to determine the position of the wedge 3 relative to the fastening element 1 automatically and continuously, in the fastening system of the present invention the detection elements 5 determine the position of the wedge 3 with respect to the fastening element 1 in a continuous and precise manner.

In the first embodiment, the relative position of the magnetic sensors 4 with respect to the magnets 5 is detected. The signal with respect to this position is sent to the control means 6, which performs the necessary calculations to provide a user with the information about the position of the wedge 3.

The user can view said information through an external device, for example, a computer, a mobile phone or any other suitable device. Furthermore, if desired, the control means 6 can issue an alert in the event that it is determined that the position of the wedge 3 is not correct based on predetermined parameters.

For example, in the external device there could be a signal in different colours. Thus, green could indicate that the position of the wedge is correct, orange could indicate that an intervention is required in the near future, and red could indicate that the machine must stop to change the wedge or to rebuild the cutting edge.

The operation is the same in the second and third embodiments. In this case, the position of the hole or holes is determined by the sensors 4, while also performing the necessary calculations by means of the control means 6 to determine the specific position of the wedge 3.

Although reference has been made to a specific embodiment of the invention, it is obvious to a person skilled in the art that the fastening system described above is susceptible to numerous variations and modifications, and that all the details referred to above can be replaced by other technically equivalents, without departing from the scope of protection defined by the claims provided below.

## Claims

1. Fastening system of an adapter for earthmoving machines comprising:
a fastening element (1) which fastens an adapter (2) to an edge (10) of a bucket of the earthmoving machine; and
a wedge (3) placed in contact between the fastening element (1) and the edge (10), **characterized in that** the system comprises a plurality of sensors (4) arranged in the wedge (3) or in the fastening element (1) which detect at least one detection element (5) arranged in the other between the fastening element (1) or the wedge (3).

2. The fastening system of an adapter for earthmoving machines according to claim 1, wherein such sensors (4) are magnetic field sensors.

3. The fastening system of an adapter for earthmoving machines according to claim 1, wherein such sensors (4) are metal sensors.

4. The fastening system of an adapter for earthmoving machines according to claim 1 or 2, wherein at least one detection element (5) is a magnet or a plurality of magnets.

5. The fastening system of an adapter for earthmoving machines according to claim 1 or 3, wherein at least one detection element (5) is a hole or a plurality of holes.

6. The fastening system of an adapter for earthmoving machines according to claim 3, wherein such sensors (4) are spirals printed on a printed circuit board.

7. The fastening system of an adapter for earthmoving machines according to claim 1, wherein such sensors (4) are connected to a control means (6), which performs the calculations to determine the position of the wedge (3) with respect to the fastening element (1).
